# EUROPÄISCHE PATENTANMELDUNG

(11) **EP 0 603 521 A1**
(43) Veröffentlichungstag der Anmeldung: **29.06.1994**
(21) Anmeldenummer: 93118039.2
(22) Anmeldetag: 08.11.1993
(51) Int. Cl.: F28D 5/00, B64G 1/50

(54) **Ölkühler für Raumfahrzeuge**

(30) Priorität: 21.12.1992 DE 4243316
(71) Anmelder: Daimler-Benz Aerospace Aktiengesellschaft, D-80995 München (DE)
(72) Erfinder: Leidinger, Bernhard, Prof.Dr., D-45478 Mulheim-Speldorf (DE)
(74) Vertreter: Hansmann, Dierk, Dipl.-Ing.

(57) **Zusammenfassung**

Ein Ölkühler für Raumfahrzeuge ist in Form eines Verdampfungswärmetauschers aufgebaut, bei dem im Inneren eines Prozeßraumes (2) eine Vielzahl von Röhrchen (3) angeordnet ist. Durch diese Röhrchen (3) wird ein Verdampferfluid, vorzugsweise Wasser, geleitet, während die Röhrchen (3) auf ihrer Außenseite von dem zu kühlenden Öl umströmt werden. Die Röhrchen (3) enden in einem Dampfsammelraum (8), wo sie mit Austrittsbohrungen (10) für das verdampfte Fluid versehen sind und wo eine auf ihrer Außenseite angebrachte hydrophobe Beschichtung (11) zugleich einen Austritt unverdampften Fluids verhindert. Letzteres wird über eine Kapillarstruktur (12) im Inneren der Röhrchen (3) wieder in den Prozeßraum (2) zurückgeleitet.

## Beschreibung

Die Erfindung betrifft eine Vorrichtung zur Kühlung von Schmier- und/oder Hydrauliköl in Raumfahrzeugen in Form eines Verdampfungswärmetauschers, bei dem in einem Prozeßraum, in dem voneinander beabstandete Röhrchen angeordnet sind, das zu kühlende Öl in thermischen Kontakt mit einem Verdampferfluid gebracht wird, das vom flüssigen in den dampfförmigen Aggregatzustand überführt und an die Umgebung abgegeben wird und bei dem das Verdampferfluid durch die Röhrchen geleitet wird und diese von dem zu kühlenden Öl umströmt werden.

Bei Raumfahrzeugen, die sich in der Auf- oder Abstiegsphase durch die Erdatmosphäre befinden oder die in der Erdumlaufbahn hohen thermischen Belastungen ausgesetzt sind, muß die entstehende Abwärme an die Umgebung, d.h. in den Weltraum, abgeführt werden. Dies geschieht unter anderem mit Verdampfungswärmetauschern, in denen die überschüssige Wärme durch einen Phasenwechselvorgang von einem Verdampferfluid aufgenommen und mit dem Dampfstrom an die Umgebung abgegeben wird. Neben wenigstens einem, in der Regel aber zwei Wärmetauschern, die die Abwärme der verschiedenen Systeme und Komponenten sowie die metabolische Abwärme der Besatzung sammeln und auf eine Temperatur von etwa 6^{o}C abkühlen, wird in autonom zur Erde zurückkehrenden Raumfahrzeugen, sogenannten Raumgleitern, ein weiterer Verdampfungswärmetauscher eingesetzt, der häufig auch als Ölkühler bezeichnet wird und der die Aufgabe hat, den Hydraulikund Schmierölkreislauf der hydraulischen Flugsteuerungsanlage bei einer Temperatur von etwa 105^{o}C zu halten.

Aus der Literaturstelle "Shuttle Orbiter Water Spray Boiler", ASME 78-ENAS-17, 1978, ist eine Vorrichtung der eingangs genannten Art bekannt geworden, die zur Kühlung der im Hydrauliksystem und der Hilfsenergieanlage (APU) des Space Shuttle verwendeten Öle dienen soll. Es handelt sich bei dieser bekannten Vorrichtung, wie auch bei anderen für diesen Einsatzzweck verwendeten Systemen, um einen sogenannten Sprühkühler, bei dem im Prozeßraum eine Vielzahl öldurchflossener Röhrchen mit dem als Verdampferfluid verwendeten Wasser besprüht und die überschüssige Wärme als Wasserdampf in den Weltraum abgeführt wird. Eine solche Anordnung hat den Nachteil, daß zum einen der Wärmeübergang des die Röhrchen durchfließenden Öls wegen fehlender Turbulenzen in der Ölströmung häufig nur unzureichend ist und daß zum anderen das auf die Röhrchen gesprühte Wasser diese nicht gleichmäßig benetzt. Eine gewisse Verbesserung der Wärmeübertragung läßt sich bei dieser bekannten Anordnung gegebenenfalls dadurch erzielen, daß die öldurchflossenen Röhrchen gekrimpt werden.

Aufgabe der Erfindung ist es, eine Vorrichtung der eingangs genannten Art so auszubilden, daß die Wärmeübertragung wesentlich verbessert wird und daß das zu verdampfende Medium möglichst optimal ausgenutzt wird.

Die Erfindung löst diese Aufgabe durch eine Vorrichtung mit den kennzeichnenden Merkmalen des Patentanspruchs 1, bei der das zu verdampfende Medium durch die im Prozeßraum angeordneten Röhrchen geleitet wird und diese Röhrchen von dem zu kühlenden Öl umströmt werden. Vorteilhafte Weiterbildungen der erfindungsgemäßen Vorrichtung, die die Effizienz dieser Vorrichtung noch erhöhen, sind in den weiteren Ansprüchen angegeben.

Zwar sind aus der Literaturstelle "Entwicklung von Verdampfungskühlern für Raumfahrzeuge wie Hermes", die den Inhalt eines im Oktober 1992 auf dem VDI - Thermodynamik Kolloquium in Aachen gehaltenen Vortrages wiedergibt, bereits Verdampfungswärmetauscher bekannt geworden, bei denen ein Verdampferfluid über einzelne Kanäle durch den Prozeßraum geleitet wird, die von der Kühlflüssigkeit umströmt werden, jedoch handelt es sich bei diesen bekannten Vorrichtungen nicht um Ölkühler. Vielmehr ist dieses Prinzip bisher von sogenannten Ammoniakverdampfern bekannt, d.h. von Verdampfungswärmetauschern, in denen Wasser als Kühlflüssigkeit und Ammoniak als Verdampferfluid eingesetzt werden und die somit einer anderen Gattung von Verdampfungswärmetauschern angehören.

Nachfolgend soll die Erfindung anhand eines in der Zeichnung dargestellten Ausführungsbeispiels näher erläutert werden. Es zeigen:
- Fig. 1: einen Verdampfungswärmetauscher, der zur Kühlung von Schmier- und Hydraulikölen in Raumfahrzeugen dient, in perspektivischer, teilweise aufgeschnittener Darstellung und
- Fig. 2 und 3: in vergrößerten Detaildarstellungen der Anordnung gemäß Fig. 1 den Aufbau eines Röhrchens.

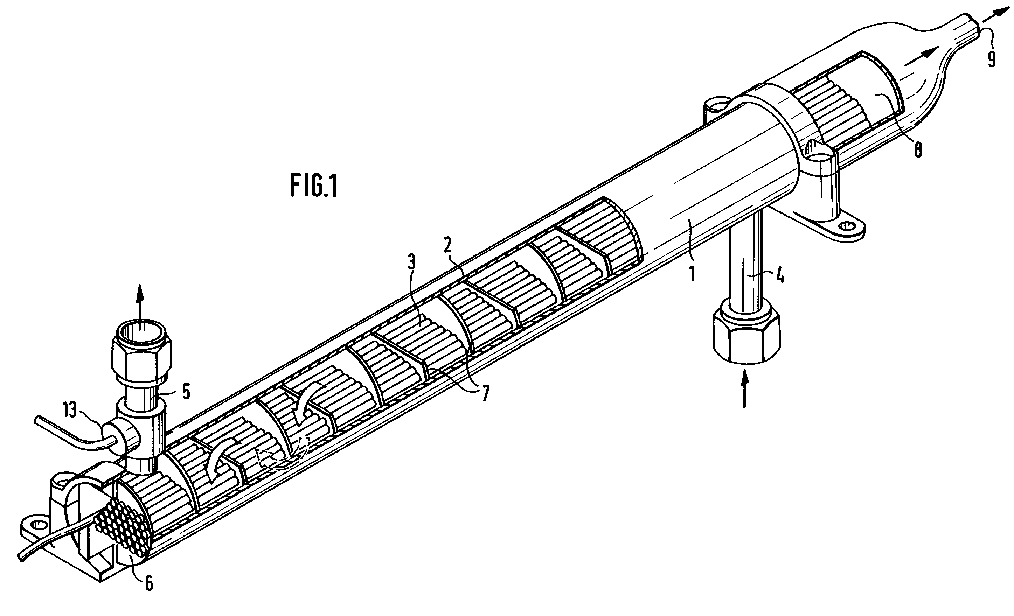

Der in Fig. 1 dargestellte Verdampfungswärmetauscher besteht aus einem im wesentlichen zylindrischen Gehäuse 1, in dessen Innerem in einem Prozeßraum 2 eine Vielzahl gleichartiger Röhrchen 3 angeordnet ist, die parallel zur Längsachse des Gehäuses 1 verlaufen und die gleichmäßig voneinander beabstandet über den gesamten Querschnitt des Prozeßraumes 2 verteilt sind. Der Prozeßraum 2 ist an seinen beiden Endbereichen über je einen Einlaßstutzen 4 bzw. einen Auslaß 5 mit einem hier nicht dargestellten Kühlkreislauf für das zu kühlende Öl verbunden. Endseitig wird der Prozeßraum 2 jeweils über Abschlußplatten 6 verschlossen, von denen in Fig. 1 nur die im Bereich des Auslasses 5 angeordnete Abschlußplatte sichtbar ist, während die zweite, in unmittelbarer Nähe des Einlaßstutzens 4 angeordnete Abschlußplatte, durch das Gehäuse 1 verdeckt ist. Ferner sind im Prozeßraum 2 in gleichbleibenden Abständen Strömungsblenden 7 angeordnet. Die Durchlaßöffnungen zweier aufeinanderfolgender Strömungsblenden 7 sind dabei jeweils um 180^{o} versetzt gegeneinander angeordnet, so daß sich, wie in Fig. 1 durch Pfeile dargestellt, ein mäanderförmiger Strömungspfad des Kühlmittels einstellt.

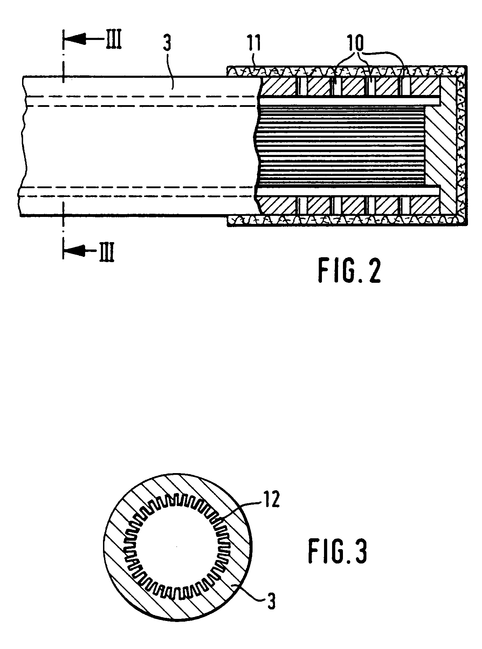

Wie aus Fig. 1 weiterhin ersichtlich ist, ragen die Röhrchen 3 mit ihren Endbereich aus dem Prozeßraum 2 hinaus in einen Dampfsammelraum 8, der sich unmittelbar an den Prozeßraum 2 anschließt und der sich in seinem dem Prozeßraum 2 abgewandten Endbereich düsenförmig zu einem Dampfauslaß 9 verjüngt. Die Endbereiche der Röhrchen 3 sind gemäß der teilweise geschnittenen Darstellung in Fig. 2 mit Austrittsbohrungen 10 für das verdampfte Fluid versehen. Außerdem sind sie im Bereich dieser Bohrungen auf ihrer Außenseite mit einer hydrophoben Membran 11 umwickelt bzw. beschichtet, durch die im Dampfstrom mitgeschleppte, nicht verdampfte Flüssigkeitströpfchen oder rekondensierter Dampf im Inneren dieser Röhrchen 3 zurückgehalten wird. Wie aus der Querschnittdarstellung eines Röhrchens 3 in Fig. 3 hervorgeht, sind die Röhrchen 3 im Inneren mit einer Kapillarstruktur versehen, wobei diese im Fall des hier dargestellten Ausführungsbeispiels aus einer Vielzahl von in axialer Richtung verlaufenden Kapillarrillen 12 besteht. Der gleich Effekt, nämlich eine Rückführung des im Bereich der Auslaßbohrungen 10 durch die hydrophobe Membran 11 zurückgehaltenen unverdampften Fluids in die Verdampferzone des Prozeßraumes 2, läßt sich auch durch eine Innenbeschichtung der Röhrchen 3 mit einer saugenden Kapillarstruktur erzielen. Diese kann beispielsweise in Pulverform aufgebracht werden.

Das zu kühlende Öl, dessen Strömungsverlauf in Fig. 1 durch geschlossene Pfeile dargestellt ist, tritt durch den Einlaßstutzen 4 in den Prozeßraum 2 ein. Dort umströmt es die Röhrchen 3, wobei es durch die Anordnung der Blenden 7 zu einem mäanderförmigen Strömungsverlauf gezwungen wird. Es verläßt den Prozeßraum 2 über den Auslaß 5, wobei seine Austrittstemperatur durch einen am Auslaß 5 angeordneten Temperaturfühler 13 erfaßt wird.

Das Verdampferfluid, im Fall des hier beschriebenen Ausführungsbeispiels Wasser, wird über einen in der Figur nicht dargestellten, mit einem Ventil versehenen Injektor im Bereich des Auslasses 5 in die Röhrchen 3 eingespritzt. Die Einspritzung erfolgt dabei in Abhängigkeit von der mit dem Temperaturfühler 13 gemessenen Austrittstemperatur des zu kühlenden Öls. Das Wasser wandert im Gegenstrom zur Strömungsrichtung des Öles durch die Röhrchen 3 und nimmt dabei so viel Wasser aus dem Ölstrom auf, daß es praktisch vollständig verdampft wird und in Dampfform in den im Dampfsammelraum 8 gelegenen Endbereich der Röhrchen 3 gelangt. Hier tritt es über die Austrittsbohrungen 10 in den Dampfsammelraum 8 über und strömt über den Dampfauslaß 9 in die Umgebung, d.h. in den Weltraum. Unverdampftes Fluid wird dabei durch die hydrophobe Membran 11 zurückgehalten und über die Kapillarrillen 12 in den Prozeßraum 2 zurückgeführt.

## Patentansprüche

1. Vorrichtung zur Kühlung von Schmier- und/oder Hydrauliköl in Raumfahrzeugen in Form eines Verdampfungswärmetauschers , bei dem in einem Prozeßraum, in dem voneinander beabstandete Röhrchen angeordnet sind, das zu kühlende Öl in thermischen Kontakt mit einem Verdampferfluid gebracht wird, das vom flüssigen in den dampfförmigen Aggregatzustand überführt und an die Umgebung abgegeben wird, und bei dem das Verdampferfluid durch die Röhrchen geleitet wird und diese von dem zu kühlenden Öl umströmt werden, dadurch gekennzeichnet, daß die Röhrchen (3) mit ihrem der Eintrittsseite für das Verdampferfluid abgewandten Endbereich in einen vom Prozeßraum (2) getrennt angeordneten Dampfsammelraum (8) ragen und in diesem Endbereich mit Austrittsbohrungen (10) versehen sind.

2. Vorrichtung nach Anspruch 1, dadurch gekennzeichnet, daß die Röhrchen (3) im Bereich der Austrittsbohrungen (10) auf ihrer Außenseite mit einer hydrophoben Beschichtung (11) versehen sind.

3. Vorrichtung nach einem der Ansprüche 1 und 2, dadurch gekennzeichnet, daß die Röhrchen (3) auf ihrer Innenseite eine in Längsrichtung verlaufende Kapillarstruktur (12) aufweisen.

4. Vorrichtung nach Anspruch 3, dadurch gekennzeichnet, daß die Kapillarstruktur aus Kapillarrillen (12) besteht.

5. Vorrichtung nach Anspruch 3, dadurch gekennzeichnet, daß die Kapillarstruktur aus einer pulverförmigen Beschichtung besteht.

6. Vorrichtung nach einem der Ansprüche 1 bis 5, dadurch gekennzeichnet, daß im Prozeßraum (2) Strömungsblenden (7) angeordnet sind.

7. Vorrichtung nach einem der Ansprüche 1 bis 6, dadurch gekennzeichnet, daß das Verdampferfluid aus Wasser besteht.
